# EUROPÄISCHE PATENTANMELDUNG

(11) **EP 2 177 575 A1**
(43) Veröffentlichungstag der Anmeldung: **21.04.2010**
(21) Anmeldenummer: 08167019.2
(22) Anmeldetag: 20.10.2008
(51) Int. Cl.: C09D 4/00, A47K 3/02

(54) **Kratzfestbeschichtung für Sanitärgegenstände**

(71) Anmelder: Nanogate AG, 66287 Quierschied-Göttelborn (DE)
(72) Erfinder: Danzebrink, Rolf, 66836 St.Ingbert (DE); Kurz, Alexander, 66663 Merzig (DE); Overs, Michael, 66459 Kirkel (DE)
(74) Vertreter: von Kreisler Selting Werner

(57) **Zusammenfassung**

Die Erfindung betrifft ein Verfahren zur Herstellung von tiefgezogenen Sanitärgegenständen sowie die daraus resultierenden Sanitärgegenstände selbst.

## Beschreibung

Die Erfindung betrifft ein Verfahren zur Herstellung von tiefgezogenen Sanitärgegenständen sowie die daraus resultierenden Sanitärgegenstände selbst.

Insbesondere Sanitärgegenstände aus Acryl sind anfällig für Verkratzung. Daher werden diese sogenannten Sanitäracrylgegenstände oftmals mit einer Kratzschutzbeschichtung versehen. Diese Kratzschutzbeschichtungen werden jedoch bislang zumeist auf die noch nicht verformten Kunststoffplatten aufgebracht. Beim anschließenden Verformen beispielsweise einem Tiefziehvorgang zur Herstellung von Duschwannen platzt die Kratzschutzbeschichtung aufgrund ihrer Sprödigkeit entweder ab oder bildet Risse. Kratzschutzbeschichtungen, bei denen dies nicht passiert, sind in der Regel biegsam und können daher keinen besonders hohen Kratzschutz gewährleisten.

DE 199 45 850 A1 beschreibt Kratzfestbeschichtungen auf Edelstahl für Anwendungen wie Maschinen und Geräte für den Sanitärbereich.

DE 197 22 559 C2 beschreibt ein Verfahren zur Herstellung verformbarer Acrylplatten mit erhöhter Kratzfestigkeit für im Tiefziehverfahren herzustellende Sanitärgegenstände, wobei unmittelbar vor dem Tiefziehvorgang ein Lack auf die Acrylplatte aufgebracht wird.

DE 299 14 200 U1 beschreibt einen Sanitärgegenstand aus tiefgezogenem Kunststoff, bei dem nach dem Tiefziehvorgang auf die Benutzeroberfläche eine Kratzschutzbeschichtung aufgebracht wird.

Auch die DE 100 40 013 A1 beschreibt einen Sanitärgegenstand aus tiefgezogenem Kunststoff mit einer Kratzschutzbeschichtung, die nach dem Tiefziehen aufgebracht wird. Hierbei wird der Binder der Beschichtung dahingehend beschrieben, dass er UV-aushärtbar ist.

DE 196 42 287 A1 beschreibt Formkörper mit einer Kratzfestbeschichtung aus Thermoplasten, wobei diese Formkörper auch als Sanitärartikel verwendet werden können. Die Kratzfestbeschichtungen können acrylhaltig sein. Dasselbe gilt für die zeitgleich eingereichten parallelen Anmeldungen DE 196 42 286 A1 und DE 196 42 288 A1.

Bei den meisten oben genannten Kratzschutzbeschichtungen wird die Kratzfestigkeit dadurch erreicht, dass in den Binder der Kratzschutzbeschichtung Partikel eingearbeitet werden.

Die Aufgabe der vorliegenden Erfindung besteht darin, kratzfeste Sanitärgegenstände aus Kunststoff bereitzustellen, die auch ohne Einbindung von Partikeln eine hohe Kratzfestigkeit aufweisen.

Die der Erfindung zugrunde liegende Aufgabe wird in einer ersten Ausführungsform gelöst durch ein Verfahren zur Herstellung von tiefgezogenen Sanitärgegenständen aus Kunststoff, das dadurch gekennzeichnet ist, dass man nach dem Tiefziehvorgang auf die Gebrauchsoberfläche eine Beschichtungszusammensetzung aufbringt, die mindestens ein Tetraacrylat-Monomer in einer Menge von 1 bis 95 Gew.% enthält, und in einem nachfolgenden Schritt die Beschichtungszusammensetzung aushärtet.

Das erfindungsgemäße Verfahren zur Herstellung von Sanitärgegenständen ist gegenüber den bekannten Verfahren dadurch vereinfacht, dass die Sanitärgegenstände zunächst in herkömmlicherweise durch Tiefziehen aus Kunststoffplatten hergestellt werden. Da handelsübliches Sanitäracryl eine nicht ausreichende Eigenstabilität aufweist, wird in einem nächsten Schritt üblicherweise ein Trägermaterial wie beispielsweise ein Wannenträger aus Styropor-schaum auf die der Benutzerseite gegenüberliegenden Seite angebracht. Durch das erfindungsgemäße Verfahren kann die Kratzschutzbeschichtung zu einem Zeitpunkt aufgebracht werden, wo die Form festliegt. Dadurch kann auch eine Kratzschutzbeschichtung gewählt werden, die sehr hart und damit aber auch sehr spröde ist. Ein Abplatzen der Kratzschutzbeschichtung durch Umformvorgänge kann so ausgeschlossen werden. Es wurde überraschend festgestellt, dass in der Kratzschutzbeschichtung auf Hartstoffpartikel im Vergleich zum Stand der Technik verzichtet werden kann, wenn für die Beschichtungszusammensetzung ein Tetraacrylat-Monomer eingesetzt wird. Mit solchen Beschichtungszusammensetzungen können nämlich besonders harte und besonders kratzfeste Beschichtungen erzielt werden.

Sanitärgegenstände im Sinne der Erfindung können beispielsweise Waschtischablagen, Duschwannen, Badewannen, Duschkabinen aus Kunststoff, Toiletten, Waschtische, Waschbecken aber auch Kunststoffabdeckungen von Solarien sein.

Die aus Kunststoff bestehenden Sanitärgegenstände enthalten beispielsweise Polyacryl, Polycarbonat, Polystyrol oder Mischungen derselben. Insbesondere bestehen die Sanitärgegenstände aus diesen Kunststoffen. Genauso ist es jedoch auch möglich, dass die Sanitärgegenstände aus gefülltem Sanitäracryl, wie beispielsweise dem Produkt Quaryl^{®} der Firma Villeroy & Boch bestehen.

Als Tetraacrylat-Monomer setzt man vorzugsweise Pentaerythritol-Tetraacrylat ein. Damit konnte eine besonders hohe Kratzfestigkeit erzielt werden.

Vorzugsweise setzt man eine Beschichtungszusammensetzung ein, die 2 bis 50 Gew.%, insbesondere 3 bis 20 Gew.% des Tetraacrylat-Monomers aufweist. Dadurch kann die Viskosität der Beschichtungszusammensetzung beispielsweise durch zusätzliche Lösungsmittel so eingestellt werden, dass sich die Beschichtungszusammensetzung auch für Beschichtungsverfahren wie beispielsweise Sprühen eignet.

Man setzt vorzugsweise eine Beschichtungszusammensetzung ein, die vorzugsweise 0,1 bis 30 Gew.%, insbesondere 0,2 bis 3 Gew.% eines Triacrylat-Monomers aufweist. Überraschenderweise hat sich herausgestellt, dass dann auch ohne Primer eine hervorragende Haftung der Beschichtung erzielt wird. Zudem sind die Fließeigenschaften des Lacks besser und die Trocknung günstiger, da UV eingesetzt werden kann. Es wurde so auch eine besonders hohe Kratzfestigkeit, eine besonders hohe Brillanz der Oberfläche und besonders gute easy-to-clean Eigenschaften beobachtet. Es hat sich überraschenderweise herausgestellt, dass die erfindungsgemäße Beschichtung zu einem UV-Schutz und somit zu einem Alterungsschutz führt.

Vorzugsweise setzt man eine Beschichtungszusammensetzung ein, die 5 bis 90 Teile eines Lösungsmittels, insbesondere eines Alkohols aufweist. Beispielsweise kann als Alkohol Isopropanol oder Ethanol eingesetzt werden. Dadurch kann die Viskosität der Beschichtungszusammensetzung optimal auf das Beschichtungsverfahren abgestimmt werden.

Zur weiteren Verbesserung der Kratzfestigkeit können in der Beschichtungszusammensetzung auch nanoskalige Teilchen mit einem mittleren Durchmesser im Bereich von 10 bis 200 nm enthalten sein. Diese Teilchen können im Lack in einer Menge von 1 bis 50 Gew.%, vorzugsweise in einem Bereich von 2 bis 30 Gew.% enthalten sein. Diese Teilchen sind beispielsweise anorganisch. So lassen sich Oxide, wie beispielsweise Titandioxid, Siliciumdioxid oder Aluminiumoxid einsetzen.

Die Beschichtungszusammensetzung wird beispielsweise durch Offsetdrucken, Aufgießen, Tauchverfahren, Flutverfahren, Spitzverfahren, Sprühverfahren, Raken oder Walzen aufgebracht. Vorteilhafterweise wird die Beschichtung mit einem Sprühroboter aufgebracht. Dadurch können auch komplexe Formen gleichmäßig beschichtet werden.

Vorteilhafterweise wird der Sanitärgegenstand vor der Beschichtung vorgereinigt. Hierzu bietet sich besonders Abblasen mit Luft an. Besonders bevorzugt setzt man hierzu ionisierte Luft ein. Dadurch können auch feinste Staubpartikel zuverlässig vor der Beschichtung entfernt werden.

In einer weiteren Ausführungsform wird die der Erfindung zugrunde liegende Ausführungsform gelöst durch einen Sanitärgegenstand, der nach dem erfindungsgemäßen Verfahren erhalten wird, der dadurch gekennzeichnet ist, dass die Schichtdicke der ausgehärteten Beschichtung in einem Bereich von 0,5 bis 500 µm liegt. Insbesondere liegt die Schichtdicke in einem Bereich von 1 bis 5 µm.

Überraschenderweise hat sich herausgestellt, dass gerade Beschichtungen, die aus Beschichtungszusammensetzungen mit Tetraacrylat resultieren, eine besonders hohe Beständigkeit gegenüber KMnO₄, eine besonders hohe Temperaturwechselbeständigkeit und eine besonders hohe mechanische Haltbarkeit aufweisen.

Die Beständigkeit gegenüber KMnO₄ kann gemäß den DIN EN 198 und DIN EN 263 gemessen werden. Der entstandene Rückstand konnte leicht mit Wasser und Scheuermilch entfernt werden.

Die Temperaturwechselbeständigkeit kann gemäß der DIN EN 249 gemessen werden und beträgt vorzugsweise mindestens 100 Zyklen ohne Erosionsspuren.

In einer weiteren Ausführungsform wird die der Erfindung zugrunde liegende Ausführungsform gelöst durch einen Sanitärgegenstand, **dadurch gekennzeichnet, dass** die mit Wasser in Kontakt kommende Oberfläche eine Glanzzahl bei 60° nach DIN 67530 von mehr als 90 und gleichzeitig einen Kontaktwinkel von mindestens 90° von Wasser gegen Luft hat.

Der Kontaktwinkel kann beispielsweise mit dem Tropfenkonturanalyse-System DSA100 der Firma Krüss bei 25°C und 1 atm von entmineralisiertem Wasser gegen Luft gemessen werden. Durch den hohen Kontaktwinkel stellt sich die sog. easy-to-clean Eigenschaft ein.

Vorzugsweise ist dieser Sanitärgegenstand erhalten nach dem erfindungsgemäßen Verfahren.

### Ausführungsbeispiel:

| Rezeptur Additiv: | | |
|---|---|---|
| Highlink NanO G 502 | Clariant | 100,00 g |
| Dynasilan MEMO | Evonik-Degussa | 10,11 g |
| 0,1 molare HCl | Merck Eurolab | 1,10 g |

Highlink und MEMO wurden vermischt und mit der Salzsäure versetzt. Das Gemisch 24 h wurde bei 65°C gerührt und im Vakuum eingeengt (40°C, 40 mbar). Es resultierte eine hochviskose Flüssigkeit mit einem Feststoffgehalt etwa 80 %.

### Rezeptur:

| | | |
|---|---|---|
| Sartomer SR 295 | Sartomer | 24 g |
| Ethanol vergällt | Merck Eurolab | 70 g |
| Additiv (s.o.) | Nanogate | 5 g |
| Irgacure 184 | Ciba | 0,5 g |
| BYK UV 3570 | BYK Chemie | 0,5 g |
| Gesamtmenge | | 100,00 g |

Sartomer wurde in Ethanol gelöst und mit dem Additiv versetzt. Nach zweistündigem Rühren wurde Irgacure 184 und BYK 3570 zugegeben. Das Material wurde unter Lichtabschluss gelagert.

Anschließend wurde die Zusammensetzung mittels Sprühen mit einer handelsüblichen Lackierpistole mit einer Trockenschichtdicke von ca. 5 µm auf eine handelsübliche Duschwanne aufgetragen. Die Aushärtung erfolgte mittels UV-Strahlung (Quecksilberdampflampen; Energieeintrag 2 J/cm²).

### Die resultierende Beschichtung wies folgende Eigenschaften auf:

| | |
|---|---|
| Ritzhärte nach Wolff-Wilborn: | 7H (PMMA) |
| Härte nach Erichsen: | 15 N |

| | |
|---|---|
| Abriebfestigkeit Taberabraser (CS10F) | Trübungsverlust < 10 % |

Für die nachfolgende Prüfung wurde eine Acrylduschwanne im Format 80 cm x 80 cm x 6 cm des Herstellers Villeroy & Boch beschichtet.

Chemikalienbeständigkeit nach DIN EN 198 und DIN EN 263:
Überprüfung der Beschichtung für Sanitäracryl auf Chemikalien, die in den Nor-men DIN EN 198 und DIN EN 263 festgeschrieben sind:
   · Essigsäure, 10% V/V
   · Natriumhydroxidlösung, 10% m/m
   · Ethanol, 70% V/V
   · Natriumhypochlorit, 5% aktives Chlor
   · Methylenblau, 1% m/m
   · Handelsübliches, phenolisches Desinfektionsmittel, 9,5 g/l
   · Ammoniaklösung 264 g/l
   · Natriumcarbonat Decahydratlösung, 225 g/l
   · Zitronensäurelösung, 100 g/l
   · Salzsäurelösung, 100 g/l
   · Wasserstoffsuperoxid, 300 g/l
   · Kaliumpermanganat, 10 g/l

Die Glanzzahl bei 60° wurde gemäß DIN 67530 gemessen und betrug 93,9. Zum Vergleich betrug die Glanzzahl von einer neuen unbeschichteten Duschwanne 88,4. Die Glanzzahl einer unbeschichteten Duschwanne, die ohne Beschichtung dennoch wie zur Aushärtung der Beschichtung mit etwa 7000 mJ/cm² mit einer Quecksilberdampflampe mit UV-Licht bestrahlt wurde, betrug 81,1.

Der Kontaktwinkel von entmineralisiertem Wasser wurde gegen Luft bestimmt und betrug 90°.

Der Gelbwert wurde gemäß DIN 6167 gemessen und betrug 1,28. Zum Vergleich betrug der Gelbwert von einer neuen unbeschichteten Duschwanne 0,79. Der Gelbwert einer unbeschichteten Duschwanne, die ohne Beschichtung dennoch wie zur Aushärtung der Beschichtung mit etwa 7000 ml/cm² mit einer Quecksilberdampflampe mit UV-Licht bestrahlt wurde, betrug 1,31.

Der Rotwert wurde analog gemessen und betrug -0,74. Zum Vergleich betrug der Rotwert von einer neuen unbeschichteten Duschwanne -0,63. Der Rotwert einer unbeschichteten Duschwanne, die ohne Beschichtung dennoch wie zur Aushärtung der Beschichtung mit etwa 7000 ml/cm² mit einer Quecksilberdampflampe mit UV-Licht bestrahlt wurde, betrug -0,84.

Nach Aushärtung der Oberfläche wurde ein Tropfen der Chemikalie auf die Oberfläche gegeben. Die Probe wurde mit einem Uhrglas abgedeckt. Nach 2 Stunden wurde die Platte mit einem trockenen Tuch abgewischt. Sollten sichtbare Rückstände vorhanden sein, konnte mit Wasser und Scheuermilch nachgewischt werden.

Ergebnis: nur Kaliumpermanganat ließ einen sichtbaren Rückstand zurück, der aber sehr einfach mit Wasser und Scheuermilch entfernt werden konnte.

### Temperaturwechsel nach DIN EN 249:

Überprüfung der Beschichtung für Sanitäracryl auf Temperaturwechselbeständig-keit nach DIN EN 249.

### Verfahren A: Ablauf permanent geöffnet:

### Prüfanforderungen

| Anzahl der Zyklen: | 1 | |
|---|---|---|
| Zyklus | 333 s WW 0 s Pause | 333 s KW 0 s Pause |
| Temperatur | 90 ± 2°C WW | 12 ± 3°C KW |
| Durchfluss | 0,15 l/s WW | 0,15 l/s KW |

| | | |
|---|---|---|
| WW = Warmwasser, KW = Kaltwasser | | |

### Verfahren B: Ablauf permanent geöffnet:

### Prüfanforderungen

| Anzahl der Zyklen: | 1 | |
|---|---|---|
| Zyklus | 600 s WW 0 s Pause | 600 s KW 0 s Pause |
| Temperatur | 75 ± 2°C WW | 12 ± 3°C KW |
| Durchfluss | 0,15 l/s WW | 0,15 l/s KW |

| | | |
|---|---|---|
| WW = Warmwasser, KW = Kaltwasser | | |

Bei beiden Tests wurde die maximale Deformation am Ort der Messuhr mit 1,2 mm normgerecht unterhalb von 4 mm gemessen.

Nach 100 Zyklen waren keine Erosionspuren auf der Duschwannenoberfläche sichtbar.

### Stoßbeanspruchung nach der Temperaturwechselbeanspruchung:

Überprüfung der Beschichtung für Sanitäracryl auf Stoßbeanspruchung nach der Temperaturwechselbeständigkeitsprüfung nach DIN EN 249.

Es waren keine Beschädigungen der Wanne und der Beschichtung am Boden und am Rand der Duschwanne sichtbar.

### UV-Beständigkeit:

Simulation der Außenbewitterung: UV-stabil für mehr als 750 h.

## Patentansprüche

1. Verfahren zur Herstellung von tiefgezogenen Sanitärgegenständen aus Kunststoff, **dadurch gekennzeichnet, dass** man nach dem Tiefziehvorgang auf die Gebrauchsoberfläche eine Beschichtungszusammensetzung aufbringt, die mindestens ein Tetraacrylat-Monomer in einer Menge von 1 bis 95 Gew.% enthält, und in einem nachfolgenden Schritt die Beschichtungszusammensetzung aushärtet.

2. Verfahren gemäß Anspruch 1, **dadurch gekennzeichnet, dass** man Pentaaerythritol Tetraacrylat als Tetraacrylat-Monomer einsetzt.

3. Verfahren gemäß Anspruch 1, **dadurch gekennzeichnet, dass** man eine Beschichtungszusammensetzung einsetzt, die 2 bis 50 Gew.%, insbesondere 3 bis 20 Gew.% des Tetraacrylat-Monomers enthält.

4. Verfahren gemäß Anspruch 1, **dadurch gekennzeichnet, dass** man eine Beschichtungszusammensetzung einsetzt, die 0,1 bis 30 Gew.%, insbesondere 0,2 bis 3 Gew.% eines Triacrylat-Monomers aufweist.

5. Verfahren gemäß Anspruch 1, **dadurch gekennzeichnet, dass** man eine Beschichtungszusammensetzung einsetzt, die 5 bis 90 Teile eines Lösungsmittels, insbesondere eines Alkohols aufweist.

6. Sanitärgegenstand erhalten nach dem Verfahren gemäß Anspruch 1, **dadurch gekennzeichnet, dass** die Schichtdicke der ausgehärteten Beschichtung in einem Bereich von 0,5 bis 500 µm liegt.

7. Sanitärgegenstand, **dadurch gekennzeichnet, dass** die mit Wasser in Kontakt kommende Oberfläche eine Glanzzahl bei 60° nach DIN 67530 von mehr als 90 und gleichzeitig einen Kontaktwinkel von mindestens 90° von Wasser gegen Luft hat.

8. Sanitärgegenstand gemäß Anspruch 7 erhalten nach dem Verfahren gemäß Anspruch 1.
